# EUROPÄISCHE PATENTANMELDUNG

(11) **EP 4 374 967 A1**
(43) Veröffentlichungstag der Anmeldung: **29.05.2024**
(21) Anmeldenummer: 23212808.2
(22) Anmeldetag: 28.11.2023
(51) Int. Cl.: B03B 9/06, B02C 21/00, B02C 23/14, B02C 23/16, B09B 3/35

(54) **VERFAHREN ZUR RÜCKGEWINNUNG VON MINERALISCHEN SUBSTRATEN AUS KÜNSTLICHE MINERALFASERN ENTHALTENDEN WERTSTOFFEN**

(30) Priorität: 28.11.2022 DE 102022131424
(71) Anmelder: DFM IP B.V., 6222 NS Maastricht (NL)
(72) Erfinder: Devilée, Philippe, 6211PA Maastricht (NL); Fehlhaber, Thomas, 82399 Raisting (DE); Mödinger, Fritz, 73035 Göppingen (DE)
(74) Vertreter: Schlimme, Wolfram

(57) **Zusammenfassung**

Ein Verfahren zur Rückgewinnung von mineralischen Substraten aus künstliche Mineralfasern enthaltenden Wertstoffen (W), ist gekennzeichnet durch die folgenden Schritte:
a) Zerkleinern der Wertstoffe (W) und Separieren von künstlich erzeugte Mineralfasern aufweisenden Faserwertstoffen;
b) Vermischen der separierten Faserwertstoffe mit Wasser oder mit einem Wasser enthaltenden Fluid zu einer fließfähigen Suspension;
c) Zuführen der Suspension zu einer Mühle (30) und Mahlen der Suspension;
d) Abführen der gemahlenen Suspension aus der Mühle und Separieren von Feststoffen aus der Suspension, die kleiner sind als eine vorgegebene Korngröße;
e) Entwässern und Trocknen der im Schritt d) separierten Feststoffe.

## Beschreibung

### TECHNISCHES GEBIET

Die vorliegende Erfindung betrifft ein Verfahren zur Rückgewinnung von mineralischen Substraten aus künstliche Mineralfasern enthaltenden Wertstoffen nach dem Oberbegriff des Patentanspruchs 1. Sie betrifft ferner eine Vorrichtung zur Durchführung eines solchen Verfahrens.

### HINTERGRUND DER ERFINDUNG

Künstliche Mineralfasern (KMF), umgangssprachlich als Glaswolle, Steinwolle, Mineralwolle, Kamila oder Kamelit bezeichnet, finden als Dämmmaterial, in Textilien, als Verstärkung von Kunststoffen und als Lichtleitfasern Verwendung. Künstlich erzeugte Mineralfasern werden aus mineralischen Schmelzen mittels unterschiedlicher Düsen- oder Schleuderverfahren produziert. Andere für das Verfahren geeignete mineralische Substrate sind beispielsweise Schlackefasern oder andere nicht-faserige Mineralstoffe.

Mineralfasern können unter Umständen als gesundheitsgefährliche Substanz eingestuft werden. Einerseits bezieht sich diese Einstufung auf geometrische Eigenschaften und umfasst Fasern mit einer Faserlänge (FL) > 5 µm und einem Faserdurchmesser (FD) < 3 µm sowie einem Verhältnis FL/FD > 3:1. Andererseits wird die sogenannte Biopersistenz, auch als Biobeständigkeit bezeichnet, als Kriterium für die Einstufung herangezogen, die die Eigenschaft der Fasern beschreibt, im menschlichen Körper zu verbleiben, anstatt aus diesem ausgetragen zu werden. Diese Biobeständigkeit ist umso höher, je schlechter sich die Fasern in der Lungenflüssigkeit auflösen oder andere Reinigungsprozesse des Körpers wirksam werden können.

Jährlichen fallen allein im Gebiet der Bundesrepublik Deutschland künstlich erzeugte Mineralfasern als Abfall in einer Menge von mehr als 150.000 Tonnen in Form von gefährlichen und ungefährlichen KMF-Abfällen an. Als ungefährliche KFM-Abfälle werden nicht biopersistente künstlich erzeugte Mineralfasern und solche künstlich erzeugten Mineralfasern bezeichnet, die gemäß der oben bereits aufgeführten Einstufung einen Faserdurchmesser (FD) kleiner als 3 µm und eine Faserlänge (FL) größer als 5 µm aufweisen und bei denen das Verhältnis der Faserlänge zum Faserdurchmesser (FL/FD) mindestens 3:1 beträgt. Weichen sie von diesen Parametern ab, dann gelten sie entweder als nicht gefährlich oder als Partikel und somit ebenfalls als nicht gefährlich. Alle anderen künstlich erzeugten Mineralfasern gelten gemäß einer Definition der Weltgesundheitsorganisation WHO (IARC - International Agency for Research on Cancer, 'Man-made Vitreous Fibres', IARC Monographs on the Evaluation of Carcinogenic Risks to Humans, Vol. 81,2002) als gefährlich. Biopersistente Fasern dürfen in der EU im Bausektor seit 1998 nicht mehr verwendet werden. Keramikfasern, die beispielsweise bei der Isolierung von Öfen, eingesetzt werden, und Lichtleiter sind jedoch nach wie vor biopersistent.

Die häufigsten gesundheitlichen Beeinträchtigungen durch künstlich erzeugte Mineralfasern sind Reizungen durch Einspießen größerer Fasern. Kleinere Fasern und Feinstaub, der durch Zerbrechen der Fasern entsteht, können bis tief in den menschlichen Körper gelangen. Ob sie dort die Möglichkeit haben, schwerwiegende Schädigungen hervorzurufen, hängt insbesondere von der Dauer und Stärke der Faserexposition, der Geometrie, den Dimensionen (Länge und Durchmesser) der einzelnen Fasern und deren Biopersistenz ab.

Zwar wurde 1998 in einigen Ländern die chemische und mineralogische Zusammensetzung von Mineralfasern geändert, um eine bessere Biolöslichkeit zu erzielen, doch lässt sich der künstlich erzeugte Mineralfasern enthaltende Bauschutt nicht in (neue) biolösliche und (alte) nicht mit ausreichender Zuverlässigkeit biolösliche künstlich erzeugte Mineralfasern trennen. Das hat zur Folge, dass künstlich erzeugte Mineralfasern enthaltender Bauschutt vorsorglich stets als umweltbedenklich einzustufen ist und deponiert wird. Es ist daher anzustreben, künstlich erzeugte Mineralfasern enthaltenden Abfall so aufzubereiten, dass er für den Menschen biologisch unschädlich wird.

Bei der das Gebiet der Erfindung betreffenden Behandlung von künstlich erzeugten Mineralfasern muss im Hinblick auf ein Recycling der künstlich erzeugten Mineralfasern zwischen einer betriebsinternen oder betriebsnahen Wiederverwertung von neuen Mineralfasern und einer Wiederverwertung von zurückgebauten Mineralfasern enthaltenden Stoffen unterschieden werden. Bei der betriebsinternen oder betriebsnahen Wiederverwertung handelt es sich vorwiegend um reine Mineralfasern, beispielsweise in Form von Mineralwolle, die im entsprechenden Produktionsprozess anfallen. Es handelt sich dabei um Faserabschnitte, die beispielsweise bei der Herstellung von Isoliermatten durch Zuschnitt anfallen, um überlagerte Ware oder um Ausschuss. Bei diesen künstlich erzeugten Mineralfasern kann es sich um mit Bindern behaftete Fasern oder um "reine" Fasern handeln. Hingegen sind zurückgebaute Stoffe mit künstlich erzeugten Mineralfasern verarbeitete Produkte oder Bauschutt. Die meisten dieser zur Wiederverwertung anstehenden Stoffen enthalten aus technischen Gründen auch Fremdstoffe wie beispielsweise organische oder anorganische Binder und Kleber oder um Kaschierungen. Darüber hinaus können viele Produkte, beispielsweise mit Isoliermaterial gefüllte Wärmedämmziegel, nicht einfach und sortenrein in ihre Komponenten zerlegt werden.

Außer dieser Behandlung im Hinblick auf ein Recycling kann es auch erforderlich sein, neue künstlich erzeugte Mineralfasern für die weitere Verarbeitung so vorzubehandeln, dass die Fasern zu mechanisch ungefährlichen Partikeln werden, die dann weiterverarbeitet werden können.

Wertstoffe, beispielsweise Abfallprodukte, Ausschussprodukte oder Überschussprodukte, die aus derartigen künstliche Mineralfasern aufweisenden Produkten resultieren, können - insbesondere bei Abfallprodukten - nach international gültigen Konventionen der WHO als ungefährlich oder als gefährlich eingestuft sein. Die gefährlichen Wertstoffe sind aufwändig zu behandeln, um die als physiologisch bedenklich eingestuften künstlichen Mineralfasern daraus zu isolieren und einem Weiterverarbeitungsprozess zuzuführen, in dem die als gefährlich eingestuften künstlichen Mineralfasern zu physiologisch unbedenklichen Stoffen vermahlen oder geschmolzen werden. Die als nicht gefährlich eingestuften künstlichen Mineralfasern können unmittelbar einer Weiterverarbeitung zugeführt werden. Für derartige Weiterverarbeitungsprozesse ist es erforderlich, die künstlichen Mineralfasern zunächst von anderen Wertstoffen zu trennen und zu befreien. Es verbleiben danach jedoch die Kunstharz-Anhaftungen an den Mineralfasern, die einer sortenreinen Weiterverwendung der als nicht gefährlich eingestuften Mineralfasern im Wege stehen. Gefährliche Mineralfasern können nach einer entsprechenden Aufbereitung einer allgemeinen Weiterverwendung zugeführt werden.

### STAND DER TECHNIK

Die EP 0 747 126 A beschreibt ein Verfahren und eine Vorrichtung zur Aufbereitung von Faserbestandteile und Fremdbestandteile einschließlich Kaschierungsmaterial, insbesondere von Alt-Mineralfasern. Das Verfahren beruht auf dem Einsatz einer Hochdruckwalzenschüsselmühle zur Zerkleinerung und einer Mehrzahl von Siebeinrichtungen zum Zweck der Siebklassierung.

Die DE 10 2012 218 878 A beschreibt ein Verfahren zum Recycling von Mineralwolleabfällen in welchem diese in eine Prozesskammer eingeführt werden und mittels Durchmischung unter thermischer Behandlung in eine Schmelze überführt werden. Bei diesem Verfahren ist die vorherige gesonderte Abtrennung von Kaschierungsmaterialien erforderlich.

Aus der DD 292 939 A1 sind ein Verfahren und eine Anlage zur Aufbereitung von Mineralwolle bekannt. Bei dem Verfahren werden zuerst die Mineralwolleprodukte von ihren Umhüllungen befreit, anschließend zerkleinert und die so entstandenen Mineralwolleteilchen werden desinfiziert, gespült und ausgepresst. Daran schließt sich wieder ein Zerkleinerungsvorgang an.

Die nicht vorveröffentlichte DE 10 2021 128 758 A1 zeigt und beschreibt ein Verfahren und eine Vorrichtung zum Reinigen von gebrauchten Faserwertstoffen, wobei die Faserwertstoffe zunächst zerkleinert und anschließend mit einem Wasser enthaltenden Fluid vermischt werden. Die dadurch entstehende Pulpe wird unter Überdruck mit thermischer Energie beaufschlagt. Gemäß einer dortigen Ausführungsform kann die Pulpe danach mittels einer Nassvermahlungseinrichtung vermahlen werden

In Anbetracht der potentiellen Gesundheitsgefahr, die von künstlich erzeugten Mineralfasern ausgeht, sind beim Zerkleinern und insbesondere beim Feinzerkleinern von künstlich erzeugte Mineralfasern aufweisenden Stoffen aufwendige Schutzmaßnahmen zu treffen, die verhindern, dass künstliche Mineralfasern enthaltende Stäube in die Umwelt geraten.

### DARSTELLUNG DER ERFINDUNG

Aufgabe der vorliegenden Erfindung ist es daher, ein gattungsgemäßes Verfahren anzugeben, das ohne Beeinträchtigung der erforderlichen Sicherheit bei überschaubarem Aufwand durchführbar ist, sowie eine entsprechende Vorrichtung bereitzustellen.

Der auf das Verfahren gerichtete Teil der Aufgabe wird gelöst durch das Verfahren mit den Merkmalen des Anspruchs 1.

Ein Verfahren zur Rückgewinnung von mineralischen Substraten aus künstliche Mineralfasern enthaltenden Wertstoffen ist gekennzeichnet durch die folgenden Schritte:
a) Zerkleinern der Wertstoffe und Separieren von künstlich erzeugte Mineralfasern aufweisenden Faserwertstoffen;
b) Vermischen der separierten Faserwertstoffe mit Wasser oder mit einem Wasser enthaltenden Fluid zu einer fließfähigen Suspension;
c) Zuführen der Suspension zu einer Mühle und Mahlen der Suspension;
d) Abführen der gemahlenen Suspension aus der Mühle und Separieren von Feststoffen aus der Suspension, die kleiner sind als eine vorgegebene Korngröße;
e) Entwässern und Trocknen der im Schritt d) separierten Feststoffe.

### VORTEILE

Die mit dem Verfahren zu behandelnden Faserwertstoffe, beispielsweise Mineralfasern enthaltende, zu recycelnde Fertigungs- oder Baustoff-Abfälle oder Abriss-Materialien, beispielsweise Glasfaserabfälle, Dämmmaterialabfälle oder Bau- und Abbruchabfälle, werden zunächst im Schritt a) von anhaftenden Kaschierungen, Bindemitteln, Klebern oder anderen Fremdstoffen, die keine von künstlichen Mineralfasen gebildeten Faserwertstoffe sind, befreit. In diesem Schritt werden also im Wesentlichen alle nichtglasigen oder nichtmineralischen Bestandteile abgetrennt. Anschließend werden die so separierten Faserwertstoffe im Schritt b) mit Wasser oder einem Wasser enthaltenden Fluid zu einer fließfähigen Suspension vermischt, die dann im Schritt c) einer Mühle zugeführt wird, in der die Suspension mit den Fasern nassvermahlen wird. Dieser Schritt des Mahlens kann einstufig in einem Mahlwerk oder mehrstufig in mehreren Mahlwerken nacheinander durchgeführt werden. Nach einer vorgegebenen Mahldauer, während der die in der Suspension enthaltenen Fasern zu feinkörnigen Feststoffpartikeln von gesundheitlich unbedenklicher Korngröße vermahlen werden, wird die Suspension im Schritt d) aus der Mühle abgeführt und dann werden mittels Separationsmitteln, zum Beispiel mittels Siebeinrichtungen oder anderen Klassiereinrichtungen mit beispielsweise einem Hydrzyklon, jene Feststoffpartikel aus der zugeführten Suspension separiert, die kleiner sind als eine vorgegebene, gesundheitlich unbedenkliche Korngröße. Die hierbei nicht aus der Suspension separierten größeren Feststoffpartikel können entweder deponiert oder in den Mahlprozess zurückgeführt werden. Der im Schritt d) separierte Anteil der Suspension mit den feinkörnigen Feststoffpartikeln wird anschließend im Schritt e) entwässert und die feinkörnigen Feststoffpartikel werden getrocknet.

Die vorgegebene, gesundheitlich unbedenkliche Korngröße der feinkörnigen Feststoffpartikel wird beispielsweise durch maximale Abmessungen bestimmt, die von der Weltgesundheitsorganisation (WHO) als unbedenklich vorgegebenen sind. Diese Unbedenklichkeitskriterien bestimmen eine formale, technische und rechtliche Unbedenklichkeit gemäß den Vorgaben der WHO. Diese Kriterien umfassen beispielsweise einen Formfaktor von faserartigen Feststoffpartikeln mit einem Verhältnis von Länge zu Durchmesser von weniger als 3:1. Ein weiteres Kriterium ist die gesundheitlich hoch bedenkliche Lungengängigkeit von faserigen Feststoffpartikeln. Solche Faserstäube gelten als lungengängig, wenn deren Länge größer als 5 µm und wenn deren Durchmesser kleiner als 3 µm ist.

Die durch das Verfahren wiedergewonnenen gesundheitlich unbedenklichen mineralischen Feststoffpartikel können anschließend weiterverarbeitet werden und beispielsweise bei der Herstellung von Beton, Fritten, Engoben und Glasuren sowie von keramischen Massen oder Farben und Lacken wiederverwendet werden.

Weitere bevorzugte und vorteilhafte Ausgestaltungsmerkmale des erfindungsgemäßen Verfahrens sind Gegenstand der Unteransprüche 2 bis 10.

Vorzugsweise erfolgt der Schritt a) des Zerkleinerns und Separierens der künstlich erzeugte Mineralfasern aufweisenden Faserwertstoffe in folgenden Teilschritten:
a1) Zuführen eines Wertstoffstroms (W1) von Wertstoffen (W) mit künstlich erzeugte Mineralfasern aufweisenden Faserwertstoffen zu einer ersten Grob-Zerkleinerungseinrichtung (10) und Grob-Zerkleinern der Wertstoffe (W) in der Grob-Zerkleinerungseinrichtung (10);
a2) Abscheiden von grob zerkleinerten artfremden Wertstoffbestandteilen, insbesondere von nicht-faserigen Wertstoffbestandteilen, aus dem die erste Zerkleinerungseinrichtung verlassenden grob-zerkleinerten Wertstoffstrom in einer ersten Abscheide- und Separier- Einrichtung;
a3) Zuführen der grob-zerkleinerten Wertstoffbestandteile des Wertstoffstroms zu einer zweiten Grob-Zerkleinerungseinrichtung und weiteres Zerkleinern der grob-zerkleinerten Wertstoffbestandteile des Wertstoffstroms und
a4) Abscheiden von weiter zerkleinerten artfremden Wertstoffbestandteilen, insbesondere von nicht-faserigen Wertstoffbestandteilen, aus dem die zweite Zerkleinerungseinrichtung verlassenden Wertstoffstrom und Separieren der künstlich erzeugte Mineralfasern aufweisenden Faserwertstoffe aus dem Wertstoffstrom der weiter zerkleinerten Wertstoffbestandteile mittels einer zweiten Abscheide- und Separier- Einrichtung.

Dieser mehrstufige Zerkleinerungs- und Separationsprozess sorgt für eine sehr wirksame Separation der die Mineralfasern aufweisenden Wertstoffe und damit für eine hohe Sortenreinheit der für den späteren Mahlvorgang vorgesehenen Faserwertstoffe.

Zur Erzielung einer besondere hohen Sorteneinheit des rückgewonnenen Fasermaterials kann auch noch eine Ablösung der an den Mineralfasern anhaftenden Bindemittel durchgeführt werden. Wasserlösliche Bindemittelanhaftungen können beispielsweise in einem Schritt des Wässerns von den mineralischen Fasern abgewaschen oder abgelöst werden. Phenolhaltige oder formaldehydhaltige Bindemittel können beispielsweise in einem Bioreaktor biologisch mittels geeigneter, den entsprechenden Kohlenwasserstoff metabolisierende Bakterien von den mineralischen Fasern entfernt werden.

Von Vorteil ist es, wenn das Abscheiden der grob zerkleinerten artfremden Wertstoffbestandteile im Schritt a2) auch das Abscheiden von grob zerkleinerten ferromagnetischen Stoffen aus dem grob-zerkleinerten Wertstoffstrom umfasst. Dadurch können magnetisch-metallische Bestandteile wie beispielsweise Klammern, Nägel oder Schrauben, bereits frühzeitig aus dem grob-zerkleinerten Wertstoffstrom entfernt werden.

Weiterhin vorteilhaft ist es, wenn das Abscheiden der weiter zerkleinerten artfremden Wertstoffbestandteile im Schritt a4) auch das Abscheiden von ferromagnetischen Stoffen aus dem weiter zerkleinerten Wertstoffstrom umfasst. Dadurch können auch in diesem Schritt magnetisch-metallische Bruchstücke oder andere kleinere Bestandteile aus dem weiter zerkleinerten Wertstoffstrom entfernt werden.

Besonders vorteilhaft ist es, wenn das Abscheiden der weiter zerkleinerten artfremden Wertstoffbestandteile im Schritt a4) auch das Abscheiden von nichtmagnetischen metallischen Stoffen aus dem weiter zerkleinerten Wertstoffstrom umfasst. Dadurch werden auch nichtmagnetische Fremdstoffe, beispielsweise aus Aluminium oder Kupfer, aus dem Wertstoffstrom entfernt.

Besonders bevorzugt ist eine Ausführungsform des erfindungsgemäßen Verfahrens, die mit anderen Ausführungsformen kombinierbar ist und gemäß der beim Separieren von Feststoffen aus der Suspension im Schritt d) die Feststoffe aus der Suspension, die größer sind als die vorgegebene Korngröße vor die Mühle zum Schritt c) zurückgeführt und im Schritt c) erneut der Mühle zugeführt werden. Durch diese Rückführung der Suspension mit den nicht separierten Feststoffen und das sich dann anschließende nochmalige Vermahlen wird die Effizienz des Verfahrens erhöht und die Menge der zu deponierenden Reststoffe reduziert.

Von Vorteil ist es auch, wenn das Grob-Zerkleinern der Wertstoffe des Wertstoffstroms in der Grob-Zerkleinerungseinrichtung im Schritt a1) durch Schreddern der Wertstoffe in einem Schredder erfolgt.

Ebenfalls vorteilhaft ist es, wenn das Abscheiden der grob zerkleinerten artfremden Wertstoffbestandteile durch Siebung im Schritt a2) mittels einer Siebeinrichtung erfolgt, die vorzugsweise ein bewegtes Sieb, insbesondere ein Trommelsieb, aufweist.

Bevorzugterweise erfolgt das weitere Zerkleinern der grob-zerkleinerten Wertstoffbestandteile des Wertstoffstroms im Schritt a3) durch Prallabscheidung mittels zumindest eines Prallabscheiders erfolgt.

Schließlich ist es auch von besonderem Vorteil, wenn das Abscheiden von weiter zerkleinerten artfremden Wertstoffbestandteilen aus dem die zweite Zerkleinerungseinrichtung verlassenden Wertstoffstrom durch Klassieren mittels einer Klassier Einrichtung erfolgt. Dadurch werden die zerkleinerten artfremden Wertstoffbestandteile sogleich nach unterschiedlichen Größen, Massen und/oder Materialien separiert, wodurch die Wiederverwertung dieser Wertstoffe erleichtert wird.

Der auf die Vorrichtung gerichtete Teil der Aufgabe wird gelöst durch die Vorrichtung mit den Merkmalen des Anspruchs 11.

Eine Vorrichtung zur Durchführung eines erfindungsgemäßen Verfahrens ist versehen mit einer Zerkleinerungs- und Separationsanordnung, einer Suspensions-Mischanordnung, einer eine Mühle aufweisenden Nassvermahlungsanordnung und einer Entwässerungs- und Trocknungsanordnung, wobei die Nassvermahlungseinrichtung eine der Mühle in Fließrichtung des Wertstoffstroms nachgeordnete Nass-Separationseinrichtung aufweist.

Dabei ist es von besonderem Vorteil, wenn die Zerkleinerungs- und Separationsanordnung mehrstufig ausgebildet ist und dazu eine ersten Grob-Zerkleinerungseinrichtung, eine in Fließrichtung des Wertstoffstroms dieser nachgeordnete erste Abscheide- und Separier-Einrichtung, eine in Fließrichtung des Wertstoffstroms dieser nachgeordnete zweite Zerkleinerungseinrichtung und eine in Fließrichtung des Wertstoffstroms dieser nachgeordnete zweite Abscheide- und Separier-Einrichtung aufweist.

Vorzugsweise weist die erste Abscheideeinrichtung einen ersten Magnetabscheider auf.

Alternativ oder zusätzlich weist vorzugsweise die zweite Abscheideeinrichtung einen zweiten Magnetabscheider auf.

Besonders vorteilhaft ist es, wenn die zweite Abscheideeinrichtung einen Wirbelstromabscheider aufweist.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Schemadiagramm einer erfindungsgemäßen Vorrichtung zur Durchführung einer ersten Variante des erfindungsgemäßen Verfahrens und
- Fig. 2: ein Flussdiagramm einer zweiten Variante des erfindungsgemäßen Verfahrens.

### DARSTELLUNG VON BEVORZUGTEN AUSFÜHRUNGSBEISPIELEN

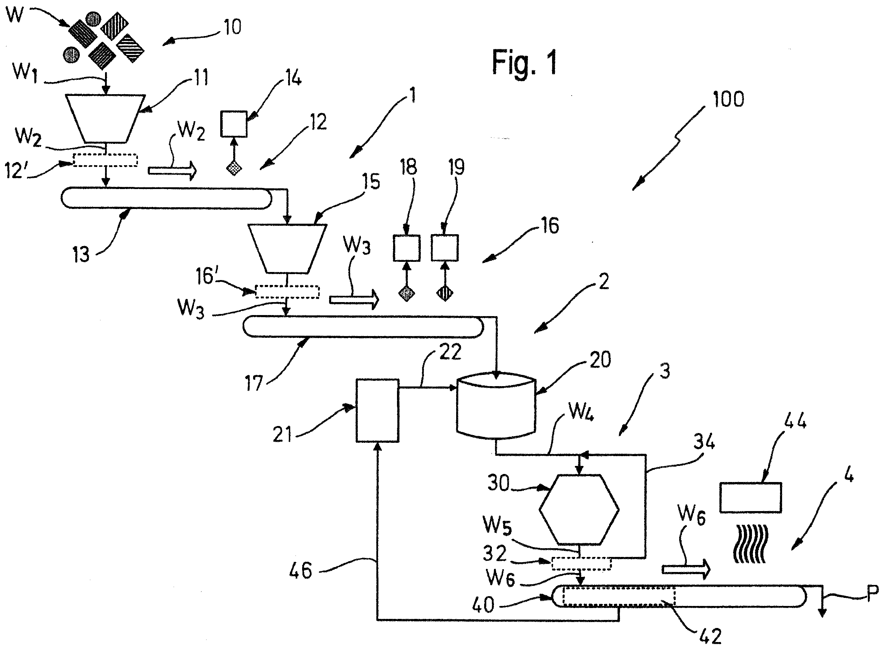

Fig. 1 zeigt in vereinfachter schematischer Darstellung eine Vorrichtung 100 zur Rückgewinnung von mineralischen Substraten aus Wertstoffen W, die künstlich erzeugte Mineralfasern aufweisen. Die Vorrichtung umfasst - in Richtung des die Vorrichtung durchlaufenden Wertstoffstroms - eine Zerkleinerungs- und Separationsanordnung 1, eine Suspensions-Mischanordnung 2, eine Nassvermahlungsanordnung 3 und eine Entwässerungs- und Trocknungsanordnung 4.

Die Wertstoffe W werden im Schritt a1) mittels einer Wertstoff-Zuführung 10, die hier nur schematisch dargestellt ist und beispielsweise eine Fördereinrichtung umfasst, als Wertstoffstrom W₁ einer ersten Grob-Zerkleinerungseinrichtung 11 zugeführt. Die erste Grob-Zerkleinerungseinrichtung 11 zerkleinert die Wertstoffe W und ist zum Beispiel von einer Schreddereinrichtung, einer Reißeinrichtung oder Rupfeinrichtung gebildet oder enthält eine solche. Der Wertstoffstrom W₁ kann außer den mineralischen Substraten auch andere Stoffe enthalten, wie beispielsweise Reste von Papier- oder Kunststoffkaschierungen, Metalldrähte oder -klammern und Ziegel-, Mörtel- oder Betonreste.

Durch die in der Grob-Zerkleinerungseinrichtung 11 vorgesehene Reiß- oder Rupfeinrichtung werden die mineralischen Substrate im Wertstoffstrom von den übrigen Anteilen des Wertstoffstroms gelöst und vereinzelt, beispielsweise werden Mineralwolleanteile dort aufgefasert.

In Fließrichtung des die erste Grob-Zerkleinerungseinrichtung 11 verlassenden Wertstoffstroms W₂ ist, der ersten Grob-Zerkleinerungseinrichtung 11 nachgeordnet, für die Durchführung des Verfahrensschritts a2) eine erste Abscheide- und Separiereinrichtung 12 mit unterschiedlichen, dem Fachmann bekannten mechanischen Trenn- und Separationsmitteln vorgesehen. Zunächst ist der ersten Grob-Zerkleinerungseinrichtung 11 unmittelbar folgend ein vorzugsweise bewegtes Grobsieb 12' vorgesehen, das beispielsweise als Rüttelsieb oder als rotierendes Trommelsieb ausgebildet ist und auf oder in das die aus der Grob-Zerkleinerungseinrichtung 11 austretenden Wertstoffbestandteile fallen. Grobe, artfremde Wertstoffbestandteile wie beispielsweise Steine und Mörtelklumpen werden dort zurückgehalten und die zerkleinerten faserhaltigen Wertstoffbestandteile treten durch dieses Grobsieb hindurch.

Die durch das Grobsieb 12' hindurchtretenden Wertstoffbestandteile fallen auf eine erste Transporteinrichtung 13, die beispielsweise von einer Rutsche oder einem Förderband gebildet ist. Oberhalb dieser ersten Transporteinrichtung 13 ist ein erster Magnetabscheider 14 vorgesehen, der aus einem magnetisierbaren Metall wie beispielsweise Eisen bestehende Wertstoffbestandteile (zum Beispiel Klammern, Nägel, Schrauben, Drähte) aus dem Wertstoffstrom W₂ herauszieht.

Die die erste Transporteinrichtung 13 verlassenden grob zerkleinerten Wertstoffbestandteile des Wertstoffstroms W₂ werden im Schritt a3) einer nachfolgenden zweiten Zerkleinerungseinrichtung 15 zugeführt und von dieser weiter zerkleinert und aufgefasert. Diese Zerkleinerungseinrichtung 15 weist beispielsweise einen Prallabscheider, auch als Prallreaktor bezeichnet, auf oder ist von einem Prallabscheider gebildet.

In Fließrichtung des die zweite Zerkleinerungseinrichtung 15 verlassenden Wertstoffstroms W₃ ist, der zweiten Zerkleinerungseinrichtung 15 nachgeordnet, für die Durchführung des Verfahrensschritts a4) eine zweite Abscheide- und Separiereinrichtung 16 mit unterschiedlichen, dem Fachmann bekannten mechanischen Trenn- und Separationsmitteln vorgesehen, die eine Klassier-Einrichtung bilden oder aufweisen können.

Zunächst ist der zweiten Zerkleinerungseinrichtung 15 unmittelbar folgend ein weiteres, engmaschigeres Sieb 16' vorgesehen, auf das die aus der zweiten Zerkleinerungseinrichtung 15 austretenden weiter zerkleinerten Wertstoffbestandteile fallen. Gröbere Wertstoffbestandteile werden von diesem engmaschigeren Sieb 16' zurückgehalten und abgeführt. Auch die zweite Abscheide- und Separiereinrichtung 16 kann als bewegtes Sieb 16`, beispielsweise als Rüttelsieb oder als rotierendes Trommelsieb, ausgebildet sein oder ein solches aufweisen.

Die durch das engmaschigere Sieb 16' hindurchtretenden Wertstoffbestandteile fallen auf eine zweite Transporteinrichtung 17, die beispielsweise von einer Rutsche oder einem Förderband gebildet ist. Oberhalb dieser zweiten Transporteinrichtung 17 ist ein zweiter Magnetabscheider 18 vorgesehen, der noch im Wertstoffstrom W₃ enthaltene, aus einem magnetisierbaren Metall wie beispielsweise Eisen bestehende Wertstoffbestandteile (zum Beispiel Bruchstücke von Klammern, Nägeln, Schrauben, Drähten) aus dem Wertstoffstrom W₃ herauszieht.

Sowohl die erste Abscheide- und Separiereinrichtung 12 als auch die zweite Abscheide- und Separiereinrichtung 16 können alternativ oder jeweils zusätzlich einen Windsichter aufweisen, mit dem leichtere Kaschierungsreste aus Papier oder Kunststoff separiert werden können.

Die die zweite Transporteinrichtung 17 verlassenden weiter zerkleinerten Wertstoffbestandteile des Wertstoffstroms W₃ werden in einen Prozessbehälter 20 der Suspensions-Mischanordnung gefördert, wo sie im Schritt b) mit Wasser oder einem Wasser enthaltenden Fluid zu einer Suspension vermischt werden. Das Wasser oder Wasser enthaltende Fluid wird aus einem Fluidtank 21 durch eine Fluidleitung 22 mittels einer (nicht dargestellten) Pumpe in den Prozessbehälter 20 eingeleitet. Die im Prozessbehälter 20 bereitete Suspension, die die zerkleinerten mineralfaserhaltigen Wertstoffbestandteile enthält, wird als Wertstoffstrom W₄ in eine Mühle 30 der Nassvermahlungsanordnung 3 geleitet, in der die Suspension für einen vorgegebenen Zeitraum nassvermahlen wird. Die mineralfaserhaltigen Wertstoffbestandteile werden dabei weiter zerkleinert bis sie eine gesundheitlich unbedenkliche Partikelgröße erreicht haben. Dieser Mahlvorgang kann mit einer einzigen Mühle oder mit mehreren kaskadiert nacheinander angeordneten Mühlen durchgeführt werden.

Ist der Mahlvorgang beendet, so wird die gemahlene Suspension im Schritt d) als Wertstoffstrom W₅ aus der Mühle 30 zu einer Nass-Separationseinrichtung 32 abgeführt. In dieser Nass-Separationseinrichtung 32, die als Abscheidemittel beispielsweise ein Sieb und/oder einen Hydrozyklon aufweist, werden die Wertstoffbestandteile, die eine gesundheitlich unbedenkliche Partikelgröße oder Korngröße erreicht haben und somit ein unbedenkliches mineralisches Substrat bilden, aus dem Suspensionsstrom abgeschieden. Der Teil der Suspension mit den nicht abgeschiedenen Wertstoffbestandteilen wird über eine Rückführleitung 34 wieder in die Mühle 30 zurückgeführt und erneut gemahlen.

Der in der Nass-Separationseinrichtung 32 abgeschiedene Teil des Suspensionsstroms mit den Wertstoffbestandteilen, die als mineralisches Substrat die gesundheitlich unbedenkliche Partikelgröße oder Korngröße erreicht haben, werden als Wertstoffstrom W₆ einer beispielsweise von einem Entwässerungs-Förderband 42 der Entwässerungs- und Trocknungsanordnung 4 gebildeten Entwässerungseinrichtung 40 zugeführt, in der das Wasser oder Wasser enthaltende Fluid von den Partikeln des mineralischen Substrats abfließen oder abtropfen kann. Anschließend wird das so erhaltene mineralische Substrat mittels einer Trocknungseinrichtung 44 getrocknet und verlässt als trockenes Pulver P die Vorrichtung 100.

Das bei der Entwässerung in der Entwässerungseinrichtung 40 abgeschiedene Wasser oder Wasser enthaltende Fluid wird gesammelt und über eine Fluidrückführleitung 46 zum Fluidtank 21 zurückgeführt und gegebenenfalls vor der Einleitung in den Fluidtank 21 gereinigt wird.

Nachstehend wird ein Anwendungsbeispiel des erfindungsgemäßen Verfahrens beschrieben, das mit der vorstehend beschriebenen Vorrichtung durchgeführt wird:
Beim erfindungsgemäßen Verfahren werden in einem ersten Schritt beispielsweise als Formteile oder Matten vorliegende Mineralwollen zerkleinert und es werden grobe Verunreinigungen wie beispielsweise Putzstücke, Holzteile, Flaschen und Getränkedosen abgeschieden. Gröbere ferromagnetische Bestandteile werden in diesem Schritt mittels Magnetabscheidung abgeschieden.

In diesem ersten Separationsschritt werden mittels zum Beispiel eines Siebes mit einer Maschenweite, die geeignet ist, um gröbere Bestanteile des Wertstoffstroms effektiv abzuscheiden, Grobteile und Mineralwolle-Wertstoffe voneinander getrennt. Die Mineralwollen liegen in einer Stückelung vor, die für die nachfolgende Verarbeitung geeignet ist. Im Shredder werden die Mineralwolle-Wertstoffen in drei Fraktionen getrennt: Mineralwollen, Abfälle und ferromagnetische Bestandteile. Die Trennung erfolgt dabei beispielsweise über ein Trommelsieb oder ein sonstiges nicht statisches Sieb.

Im Anschluss daran wird die Mineralwolle einem zweiten mechanischen Aufschluss- und Zerkleinerungsschritt zugeführt. Eventuell im Mineralwollegemisch verbliebene Verunreinigungen werden ebenfalls zerkleinert. Kaschierungen verbleiben zunächst im Massestrom.

Mit dem erfindungsgemäßen Verfahren können auch mit mineralischen Bindern gebundene Faserverbundelemente beispielsweise Akustikplatten, behandelt werden. Hierfür sind eine zusätzliche Aufbereitung und eine Abtrennung von Bestandteilen, wie beispielsweise Perliten, erforderlich.

Ferner können im Verfahren gemäß der Erfindung auch Mineralwollen behandelt werden die einer direkten Wiederverwertung als Wolle zugeführt werden. In diesem Fall kommt ein verkürztes Verfahren zur Anwendung. Mineralwollen die als Pflanzsubstrat zur Verwendung gekommen sind könnten so behandelt werden.

Im Anschluss an diesen zweiten Schritt werden ferromagnetische Verunreinigungen und unmagnetische metallische Bestandteile selektiv aus dem Mineralwollegemisch entfernt. Die metallischen Verunreinigungen liegen in einer Form vor, in der sie einer Wiederverwertung zugeführt werden können. Mittels einer Fördereinrichtung, die bevorzugt eingekapselt ist, um die Freisetzung von eventuellen gesundheitsgefährlichen Stoffen zu vermeiden, werden die zur weiteren Verarbeitung bestimmten Fraktionen einem Prallreaktor als zweiter Zerkleinerungseinrichtung zugeführt.

Der Prallreaktor ist geeignet, um Materialen mit unterschiedlich viskosem Verhalten voneinander zu trennen. Er besteht aus einem zylindrischen Mantel in welchem ein Rotor, der mit Prallelementen versehen ist, rotiert. Der Prallreaktor verfügt über eine entsprechende Zu- und Abförderöffnung. Die Abförderöffnung ist mit einer Klassiereinrichtung versehen. Die Maschenweite der Klassiereinrichtung ist für den nachfolgenden Verfahrensschritt geeignet. Der Prallreaktor gibt das behandelte Material auf ein Band aus.

Nach dem Durchlaufen des Prallreaktors erfolgt eine erneute Abtrennung von ferromagnetischen Verunreinigungen mittels eines Überbandmagnetes sowie die Abscheidung der nichtmagnetischen metallischen Bestandteile mittels eines Wirbelstromseparators. Im Anschluss wird das zu behandelnde Wertstoffmaterial beispielsweise mit Wasser vermengt um als Suspension eine Pulpe zu bilden. Diese Pulpe wird mit einer Pumpe einer Mühle zugeführt. In dieser Mühle wird das aufgegebene Material auf eine für die nachfolgende Verarbeitung vorgegebene Körnung gemahlen.

Die Pulpe wird vorzugsweise in einem zusätzlichen Verfahrensschritt einem Tank mit Mikroorganismen zugeführt und darin beispielsweise einer Mischung aus aeroben und anaeroben Bakterien ausgesetzt. Bei einem pH-Wert zwischen 4 und 8 und einer Temperatur von maximal 50°C werden die punktuell an der Oberfläche der Fasern anhaftenden Binder, meistens Formaldehyd-Phenolharze jedoch auch Stärke- und Zucker basierte Produkte, von diesen Mikroorganismen metabolisch umgesetzt. Um unerwünschte für die Mikroorganismen toxische Nebenwirkungen zu vermeiden, ist es wichtig, dass metallische Verunreinigungen, vor allem solche, die Aluminium enthalten, vorab aus der Mineralwollemischung entfernt werden. Die Behandlungsdauer ist eine Funktion der Binderkonzentration und des gewünschten Ergebnisses. Die Behandlungsdauer kann mit 2 bis 7 Tagen angegeben werden. Kürzere oder längere Behandlungsdauern erscheinen nicht wirtschaftlich.

Die Behandlung erfolgt in einem Tank mit einer Vorrichtung, um die aufgegebene Pulpe in Suspension zu halten. Ein solcher Tank kann beispielsweise mit einer diffusen Einblasung von Luft am Boden versehen sein. Mechanische Rührwerke können ebenfalls zum Einsatz kommen, bedingen jedoch eine Agglomeration der aufgegebenen Mineralfasern. Die Behandlungstanks sind mit einer Abzugsvorrichtung am Boden für Shot und andere abgesunkene feste Bestandteile ausgerüstet.

Im Anschluss an den Mahlvorgang in der Mühle wird das Material mittels einer geeigneten Einrichtung, einem Hydrzyklon oder einem Sieb, in mehrere Phasen getrennt. Abgeschieden werden aus dem aufgegeben Mineralwollegemisch der sogenannte "Shot". Ferner werden Faserbestandteile mit einer Größe, die für die nachfolgende Feinvermahlung nicht geeignet sind, abgeschieden und rückgeführt.

Das für die nachfolgende Feinvermahlung geeignete suspensierte und mineralische Fasern enthaltende Wertstoffmaterial wird mittels einer Pumpe der als Feinmahlwerk ausgebildeten Mühle, beispielsweise einer Rührwerkskugelmühle, zugeführt. Bei diesem Mahlvorgang erfahren die der Mahlvorrichtung aufgegebenen Mineralfasern keine nennenswerte Verminderung des Durchmessers, sondern vorwiegend der Länge.

Mineralfasern, die im Bau verwendeten werden, weisen einen Faserdurchmesser von im Bereich zwischen 2 bis 9 µm auf. Glasfasern, die bei der Herstellung von GFK-Bauteilen zur Anwendung kommen, weisen einen Faserdurchmesser im Bereich 2 bis 24 µm auf. Die erzielbare Mahlfeinheit ist folglich ein Wert, der geringer ist als der Grenzwert bei dem Fasern als "gefährlich" eingestuft werden müssen. Dieser entspricht einem Verhältnis von Länge zu Durchmesser von mehr als 3:1. Ein weiteres Kriterium ist, die Lungengängigkeit. Faserstäube gelten als lungengängig, wenn Die Faserlänge größer als 5 µm und wenn deren Durchmesser kleiner als 3 µm ist.

Im Anschluss an die Feinvermahlung in der Mühle wird das Mahlgut mittels einer geeigneten Einrichtung, zum Beispiel einem Hydrozyklon oder einem Sieb, in zwei Phasen getrennt: eine erste, unbedenkliche Phase oder Fraktion, die eine Partikelgröße oder Körnung aufweist, welche die Sicherheit des Materials im Sinne der entsprechenden WHO-Richtlinien sicherstellt und eine zweite, gesundheitsbedenkliche Phase oder Fraktion, welche zum Einlass der Mühle rückgeführt wird.

Die den WHO-Richtlinien entsprechende unbedenkliche Fraktion wird einer ein- oder mehrstufigen Entwässerung und Trocknung zugeführt. Die Entwässerung kann über eine Kammfilterpresse oder einen Dekanter erfolgen. Die Trocknung kann mittels Warmluft oder durch Mikrowellen erfolgen.

Die Abtrennung der Kunstharz-Binder von den mineralischen Bestandteilen erfolgt vorzugsweise mechanisch im Mahlprozess und durch biologischen Abbau der Harze mittels Mikroorganismen, beispielsweise Bakterien. Beim Verfahren wird während des Mahlprozesses Energie in die Mineralfasern eingetragen. Dies führt zu einer Erwärmung. Mechanische Scherkräfte führen zu einem Splittern der einzelnen Fasern und somit zu einem Ablösen der relativ spröden, bei der Herstellung von gebundenen Mineralwolleprodukten durch Vernebelung aufgebrachten Kunstharzbinder. Die an der Oberfläche verbliebenen Binder und die abgesplitterten Binderteilchen werden dabei durch Mikroorganismen abgebaut.

Waschwässer werden beim erfindungsgemäßen Verfahren im Kreis gefahren und über eine Osmose gereinigt. Dabei entstehender Belebtschlamm wird entweder entwässert und einer Klärschlammverbrennung zugeführt oder als Abwasser, je nach gesetzlichen Grundlagen, abgeleitet. Andere Verwendungen, wie beispielsweise als Dünger, sind ebenfalls möglich.

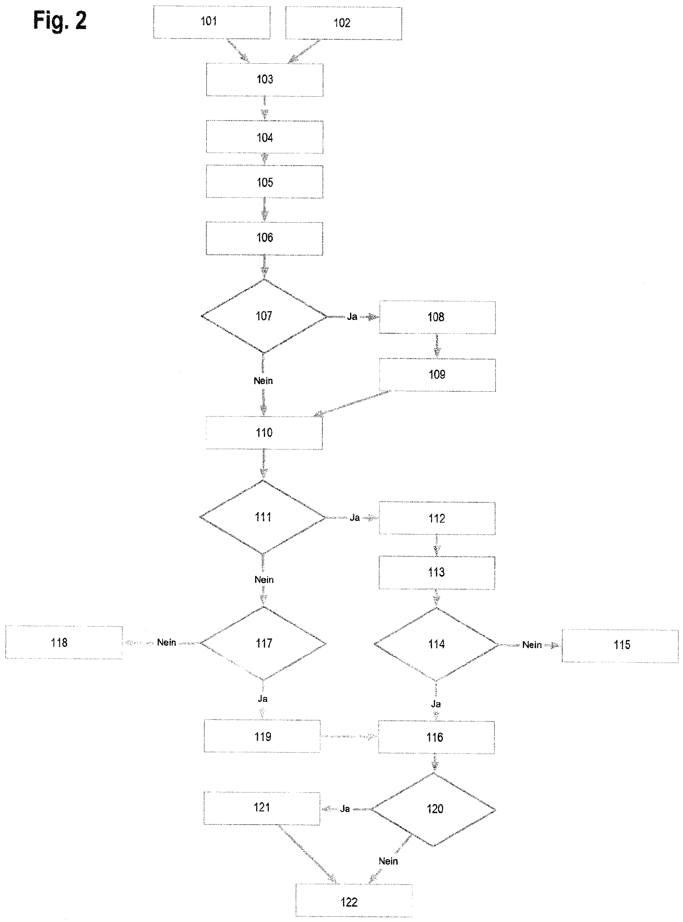

Eine in Fig. 2 schematisch dargestellte abgewandelte Variante des erfindungsgemäßen Verfahrens zur Behandlung von nicht biopersistenten (ungefährlichen) oder von biopersistenten (gefährlichen) mineralfaserhaltigen Wertstoffen umfasst zumindest die Schritte:

| | |
|---|---|
| 101) | Bereitstellen der ungefährlichen nicht biopersistenten mineralfaserhaltigen Wertstoffe |
| oder | |
| 102) | Bereitstellen der gefährlichen biopersistenten mineralfaserhaltigen Wertstoffe; |
| 103) | Grobsiebung der im Schritt 101 oder 102 bereitgestellten mineralfaserhaltigen Wertstoffe; |
| 104) | Auflösen der die Mineralfasern enthaltenen Wertstoffen vermittels einer mechanischen Vorrichtung, zum Beispiel eines Shredders, die die im Schritt 101 oder 102 beispielsweise in Ballen, Rollen oder anderen Konfektionierungen bereitgestellten mineralfaserhaltigen Wertstoffe zerkleinert; |
| 105) | Reduzierung der aufgelösten Ballen in etwa handtellergroße Stücke (Auflösung und Reduzierung können in einem oder mehreren Schritten erfolgen) und Entfernung grober Bestandteile vermittels eines Siebes, vorzugsweise eines Drehrohrsiebes; |
| 106) | Entfernung ferromagnetischer Bestandteile; |
| 107) | Entscheiden, ob nicht ferromagnetische metallische Bestandteile enthalten sind, falls das nicht der Fall ist, Zuführen der Wertstoffe zu Schritt 110; |
| 108) | Bei Vorhandensein nicht ferromagnetischer metallischer Verunreinigungen: Zuführen der Wertstoffe in eine Vorrichtung welche die Agglomeration metallischer Bestandteile und Abtrennung vom Metall von faserigen Bestandteilen ermöglicht, vorzugsweise in einem Prallreaktor oder einer Prallmühle; |
| 109) | Entfernen der nicht ferromagnetischen metallischen Bestandteile aus dem Wertstoffstrom und Zuführen der Wertstoffe zu Schritt 110; |
| 110) | Mahlen der Wertstoffe in einer Mühle, vorzugsweise in einer Wirbelstrommühle; |
| 111) | Entscheiden, ob organische Binder-Bestandteile an den Fasern im Wertstoffstrom enthalten sind, falls das nicht der Fall ist, |
| 117) | Entscheiden, ob der Wertstoffstrom gefährliche biopersistente mineralfaserhaltige Wertstoffe enthält, falls das nicht der Fall ist, Abführen der Wertstoffe aus dem Prozess in Schritt 118; |
| 119) | Falls der Wertstoffstrom gefährliche biopersistente mineralfaserhaltige Wertstoffe enthält, Aufschlämmen der faserhaltigen Wertstoffe mit Wasser mit einem Feststoffanteil von vorzugsweise 15 - 25% Feststoff zu einer Suspension und Weitertransport der Suspension zum Feinnassmahlen im Schritt 116; |
| 112) | Wird im Schritt 111) festgestellt, dass organische Binder-Bestandteile an den Fasern im Wertstoffstrom enthalten sind, erfolgt ein Aufschlämmen der faserhaltigen Wertstoffe mit Wasser mit einem Feststoffanteil von vorzugsweise 15 - 25% Feststoff zu einer Suspension und dann ein Weitertransport des Wertstoffstroms zu Schritt 113); |
| 113) | Aufgabe der Suspension in einen Bioreaktor zum Abbau der Bindemittel; |
| 114) | Entscheiden, ob der aus dem Bioreaktor abgeführte Suspensionsstrom gefährliche biopersistente mineralfaserhaltige Wertstoffe enthält, falls das nicht der Fall ist, Trocknen der Mineralfaser-Suspension in Schritt 115) und Abführen der getrockneten Fasern aus dem Prozess; |
| 116) | Falls der Suspensionsstrom gefährliche biopersistente mineralfaserhaltige Wertstoffe enthält, Feinnassmahlen der in der Suspension enthaltenen biopersistenten Fasern in einer geeigneten Mühle, Vorzugsweise in einer Kugelscheibenmühle; |
| 120) | Entscheiden, ob das im Schritt 122 abzugebende Endprodukt trocken sein soll, falls das nicht der Fall ist, Weiterleiten der feinnassgemahlenen Suspension zum Endabgabeschritt 122); |
| 121) | Falls das abzugebende Endprodukt trocken sein soll, Trocknen der feinnassgemahlenen Suspension und Abführen des getrockneten Endprodukts im Endabgabeschritt 122). |

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Zerkleinerungs- und Seperatationanordnung
- 2: Suspensions-Mischanordnung
- 3: Nassvermahlungsanordnung
- 4: Entwässerungs- und Trocknungsanordnung
- 10: Wertstoff-Zuführung
- 11: Grob-Zerkleinerungseinrichtung
- 12: erste Abscheide- und Separier- Einrichtung
- 12': Grobsieb
- 13: erste Transporteinrichtung
- 14: erster Magnetabscheider
- 15: zweite Zerkleinerungseinrichtung
- 16: zweite Abscheide- und Separier- Einrichtung
- 16': engmaschigeres Sieb
- 17: zweite Transporteinrichtung
- 18: zweiter Magnetabscheider
- 20: Prozessbehälter
- 21: Fluidtank
- 22: Fluidleitung
- 30: Mühle
- 32: Nass-Separationseinrichtung
- 34: Rückführleitung
- 40: Entwässerungseinrichtung
- 42: Entwässerungs-Förderband
- 44: Trocknungseinrichtung
- 46: Fluidrückführleitung
- 100: Vorrichtung

- P: Pulver
- W: Wertstoff
- W₁: Wertstoffstrom
- W₂: Wertstoffstrom
- W₃: Wertstoffstrom
- W₄: Wertstoffstrom
- W₅: Wertstoffstrom
- W₆: Wertstoffstrom

## Patentansprüche

1. Verfahren zur Rückgewinnung von mineralischen Substraten aus künstliche Mineralfasern enthaltenden Wertstoffen (W),
**gekennzeichnet durch** die folgenden Schritte:
a) Zerkleinern der Wertstoffe (W) und Separieren von künstlich erzeugte Mineralfasern aufweisenden Faserwertstoffen;
b) Vermischen der separierten Faserwertstoffe mit Wasser oder mit einem Wasser enthaltenden Fluid zu einer fließfähigen Suspension;
c) Zuführen der Suspension zu einer Mühle (30) und Mahlen der Suspension;
d) Abführen der gemahlenen Suspension aus der Mühle und Separieren von Feststoffen aus der Suspension, die kleiner sind als eine vorgegebene Korngröße;
e) Entwässern und Trocknen der im Schritt d) separierten Feststoffe.

2. Verfahren nach Anspruch 1,
**dadurch gekennzeichnet,**
**dass** der Schritt a) des Zerkleinerns und Separierens der künstlich erzeugte Mineralfasern aufweisenden Faserwertstoffe in folgenden Teilschritten erfolgt:
a1) Zuführen eines Wertstoffstroms (W₁) von Wertstoffen (W) mit künstlich erzeugte Mineralfasern aufweisenden Faserwertstoffen zu einer ersten Grob-Zerkleinerungseinrichtung (11) und Grob-Zerkleinern der Wertstoffe (W) in der Grob-Zerkleinerungseinrichtung (11);
a2) Abscheiden von grob zerkleinerten artfremden Wertstoffbestandteilen, insbesondere von nicht-faserigen Wertstoffbestandteilen, aus dem die erste Grob-Zerkleinerungseinrichtung (11) verlassenden grob-zerkleinerten Wertstoffstrom (W₂) in einer ersten Abscheide- und Separier- Einrichtung (12);
a3) Zuführen der grob-zerkleinerten Wertstoffbestandteile des Wertstoffstroms (W₂) zu einer zweiten Zerkleinerungseinrichtung (15) und weiteres Zerkleinern der grob-zerkleinerten Wertstoffbestandteile des Wertstoffstroms (W₂) und
a4) Abscheiden von weiter zerkleinerten artfremden Wertstoffbestandteilen, insbesondere von nicht-faserigen Wertstoffbestandteilen, aus dem die zweite Zerkleinerungseinrichtung (15) verlassenden Wertstoffstrom (W₃) und Separieren der künstlich erzeugte Mineralfasern aufweisenden Faserwertstoffe aus dem Wertstoffstrom (W₃) der weiter zerkleinerten Wertstoffbestandteile mittels einer zweiten Abscheide- und Separier-Einrichtung (16).

3. Verfahren nach Anspruch 2,
**dadurch gekennzeichnet,**
**dass** das Abscheiden der grob zerkleinerten artfremden Wertstoffbestandteile im Schritt a2) auch das Abscheiden von grob zerkleinerten ferromagnetischen Stoffen aus dem grob-zerkleinerten Wertstoffstrom (W₂) umfasst.

4. Verfahren nach Anspruch 2 oder 3,
**dadurch gekennzeichnet,**
**dass** das Abscheiden der weiter zerkleinerten artfremden Wertstoffbestandteile im Schritt a4) auch das Abscheiden von ferromagnetischen Stoffen aus dem weiter zerkleinerten Wertstoffstrom (W₃) umfasst.

5. Verfahren nach Anspruch 2, 3 oder 4,
**dadurch gekennzeichnet,**
**dass** das Abscheiden der weiter zerkleinerten artfremden Wertstoffbestandteile im Schritt a4) auch das Abscheiden von nichtmagnetischen metallischen Stoffen aus dem weiter zerkleinerten Wertstoffstrom (W₃) umfasst.

6. Verfahren nach einem der vorhergehenden Ansprüche,
**dadurch gekennzeichnet,**
**dass** beim Separieren von Feststoffen aus der Suspension im Schritt d) die Feststoffe aus der Suspension, die größer sind als die vorgegebene Korngröße vor die Mühle (30) zum Schritt c) zurückgeführt und im Schritt c) erneut der Mühle (30) zugeführt werden.

7. Verfahren nach einem der Ansprüche 2 bis 6,
**dadurch gekennzeichnet,**
**dass** Grob-Zerkleinern der Wertstoffe (W) des Wertstoffstroms (W₁) in der Grob-Zerkleinerungseinrichtung (11) im Schritt a1) durch Schreddern der Wertstoffe (W) in einem Schredder erfolgt.

8. Verfahren nach einem der Ansprüche 2 bis 7,
**dadurch gekennzeichnet,**
**dass** das Abscheiden der grob zerkleinerten artfremden Wertstoffbestandteile durch Siebung im Schritt a2) mittels einer Siebeinrichtung erfolgt, die vorzugsweise ein bewegtes Sieb (12'), insbesondere ein Trommelsieb, aufweist.

9. Verfahren nach einem der Ansprüche 2 bis 8,
**dadurch gekennzeichnet,**
**dass** das weitere Zerkleinern der grob-zerkleinerten Wertstoffbestandteile des Wertstoffstroms (W₂) im Schritt a3) durch Prallabscheidung mittels zumindest eines Prallabscheiders erfolgt.

10. Verfahren nach einem der Ansprüche 2 bis 9,
**dadurch gekennzeichnet,**
**dass** Abscheiden von weiter zerkleinerten artfremden Wertstoffbestandteilen aus dem die zweite Zerkleinerungseinrichtung (15) verlassenden Wertstoffstrom (W₃) durch Klassieren mittels einer Klassier-Einrichtung erfolgt.

11. Vorrichtung zur Durchführung eines Verfahrens nach einem der Ansprüche 1 bis 10 mit einer Zerkleinerungs- und Separationsanordnung (1), einer Suspensions-Mischanordnung (2), einer eine Mühle (30) aufweisenden Nassvermahlungsanordnung (3) und einer Entwässerungs- und Trocknungsanordnung (4),
**dadurch gekennzeichnet,**
**dass** die Nassvermahlungseinrichtung (3) eine der Mühle (30) in Fließrichtung des Wertstoffstroms nachgeordnete Nass-Separationseinrichtung (32) aufweist.

12. Vorrichtung nach Anspruch 11,
**dadurch gekennzeichnet,**
**dass** die Zerkleinerungs- und Separationsanordnung (1) mehrstufig ausgebildet ist und dazu eine ersten Grob-Zerkleinerungseinrichtung (11), eine in Fließrichtung des Wertstoffstroms dieser nachgeordnete erste Abscheide- und Separier-Einrichtung (12), eine in Fließrichtung des Wertstoffstroms dieser nachgeordnete zweite Zerkleinerungseinrichtung (15) und eine in Fließrichtung des Wertstoffstroms dieser nachgeordnete zweite Abscheide- und Separier-Einrichtung (16) aufweist.

13. Vorrichtung nach Anspruch 12,
**dadurch gekennzeichnet,**
**dass** die erste Abscheideeinrichtung (12) einen ersten Magnetabscheider (14) aufweist.

14. Vorrichtung nach Anspruch 12 oder 13,
**dadurch gekennzeichnet,**
**dass** die zweite Abscheideeinrichtung (16) einen zweiten Magnetabscheider (18) aufweist.

15. Vorrichtung nach Anspruch 12, 13 oder 14,
**dadurch gekennzeichnet,**
**dass** die zweite Abscheideeinrichtung (16) einen Wirbelstromabscheider (19) aufweist.
